# EUROPÄISCHE PATENTSCHRIFT

(11) **EP 0 795 805 B1**
(45) Veröffentlichungstag und Bekanntmachung des Hinweises auf die Patenterteilung: **08.08.2001**
(21) Anmeldenummer: 97103471.5
(22) Anmeldetag: 03.03.1997
(51) Int. Cl.: G05B 19/418, G05B 23/02

(54) **Verfahren zur Analyse von Meldeelementen einer Kraftwerksanlage**
Method for analysing output elements of a power installation
Procédé pour analyser des indicateurs dans une centrale électrique

(30) Priorität: 14.03.1996 DE 19609911
(43) Veröffentlichungstag der Anmeldung: 17.09.1997
(73) Patentinhaber: SIEMENS AKTIENGESELLSCHAFT, 80333 München (DE)
(72) Erfinder: Mederer, Hans-Gerd, Dipl.-Phys., 91052 Erlangen (DE); Politiadis-Behrens, Alexander, Dipl.-Ing. (FH), 91315 Höchstadt a.d. Aisch (DE)

(56) Entgegenhaltungen:
- WO-A-96/14609
- WO-A-97/06474
- DE-A- 4 436 658
- TECHNISCHE RUNDSCHAU TRANSFER, Bd. 80, Nr. 11, 11.März 1988, Seiten 58-63, 65, XP000022343 KIRATLI G: "EXPERTENSYSTEME FUR DIE FERTIGUNGSTECHNIK"

## Beschreibung

Die Erfindung bezieht sich auf ein Verfahren zur Analyse von Meldeelementen einer Kraftwerksanlage, deren Anlagenprozeß auf eine Organisationsstruktur abgebildet ist, anhand derer jedes Meldeelement mit einer Anzahl weiterer Meldeelemente verknüpft ist.

Ein derartiges Verfahren ist jeweils in dem nicht veröffentlichten Druckschriften WO-A-9706474 und WO-A-9614609 beschrieben, die gemäß Art. 158(1), (2), Art. 54(4) EPÜ and Regel 23(a) mit Art 79(2) EPÜ für die gemeinsam benannten Vertragsstaaten als ein Dokument nach Art. 54(3) EPÜ anzusehen sind.

In einer Leitwarte zur Steuerung einer Kraftwerksanlage fallen ständig große Mengen verschiedener Meßdaten an, die in ihrer Gesamtheit den Anlagen-oder Betriebszustand beschreiben. Das Bedienpersonal der Kraftwerksanlage steht vor der Aufgabe, die für den Betriebszustand jeweils relevanten Meßdaten oder Meßgrößen zu identifizieren und ihre Werte in bezug auf den Zustand der Anlage zu verfolgen, zu analysieren und zu interpretieren. Dabei wird das Bedienpersonal üblicherweise von in der Leittechnik der Kraftwerksanlage vorgesehenen Informationsfiltern unterstützt, die archivierte oder für den aktuellen Anlagenzustand relevante Meßdaten oder Meßgrößen zu einer Anzeige bringt. Die überwiegende Menge der insgesamt erfaßten Meßdaten oder Meßgrößen wird üblicherweise elektronisch protokolliert.

Eine im Anlagenprozeß auftretende Störung führt üblicherweise in einer Anzahl von Anlagenkomponenten zu einer Abweichung des Ist-Zustands vom Soll-Zustand. Für einen Nachweis derartiger Abweichungen vorgesehene Detektoren geben daraufhin Störungsmeldungen ab. Anhand der Gesamtheit dieser Störungsmeldungen ist die Störung in der Regel identifizierbar.

Die Störungsmeldgungen werden - ebenso wie andere den Anlagenprozeß betreffende Meßwerte oder Meldungen - üblicherweise als Meldeelemente in der Leitwarte zur Anzeige gebracht. Anhand dieser Meldeelemente ist es für das Bedienpersonal möglich, die Störung zu identifizieren und geeignete Gegenmaßnahmen zu ergreifen. Dazu ist eine Kraftwerksanlage üblicherweise in eine Organisationsstruktur gegliedert, anhand derer das Bedienpersonal entscheidet, auf welches eine Störung signalisierendes Meldeelement welche Gegenmaßnahmen zu erfolgen hat. Die Organisationsstruktur der Kraftwerksanlage ist üblicherweise in einem Betriebshandbuch niedergelegt. Das Betriebshandbuch kann dabei mehrere Bücher mit insgesamt mehreren 10.000 Seiten umfassen. In den Betriebshandbüchern ist dabei in der Art eines Verzeichnisses ein Maßnahmenkatalog hinterlegt, wobei bei jeder Maßnahme Querverweise auf die Maßnahme bedingende oder durch die Maßnahme möglicherweise ausgelöste Meldeelemente vorgesehen sind. Zudem sind in den Betriebshandbüchern weitere Querverweise vorgesehen, anhand derer Meldeelemente direkt mit anderen Meldeelementen verknüpft sind.

Allein aufgrund des Umfangs der Betriebshandbücher ist es für das Bedienpersonal jedoch zeitaufwendig und schwierig, bei einer als Meldeelement angezeigten Störungsmeldung die erforderliche Gegenmaßnahme schnell und zuverlässig aufzufinden. Zudem kann bei einem Störfall eine Mehrzahl von Anlagenteilen mittelbar oder unmittelbar betroffen sein, wobei jedes Anlagenteil im Hinblick auf die aufgetretene Störung ein darzustellendes Meldeelement generiert. Das Betriebspersonal steht somit vor der Aufgabe, die aufgetretenen Meldeelemente miteinander in Verbindung zu bringen und im Hinblick auf ihre Bedeutung für den Anlagenprozeß zu priorisieren. Das Auffinden der dazu notwendigen Informationen anhand der Betriebshandbücher ist jedoch mit einem hohen Aufwand und zudem mit hohen Anforderungen an das Bedienpersonal hinsichtlich eines enormen Zeitdrucks verbunden, da häufig kurzfristig Entscheidungen zur Einleitung von Gegenmaßnahmen getroffen werden müssen.

Der Erfindung liegt daher die Aufgabe zugrunde, ein Verfahren zur Analyse von Meldeelementen einer Kraftwerksanlage anzugeben, das eine zuverlässige und präzise Meldungsanalyse erlaubt. Dies soll so schnell geschehen, daß geeignete Gegenmaßnahmen im Bedarfsfall rechtzeitig ergriffen werden können, so daß Stillstände der Kraftwerksanlage und/oder Fehlerfortpflanzungen vermieden sind.

Diese Aufgabe wird für ein Verfahren zur Analyse von Meldeelementen einer Kraftwerksanlage, deren Anlagenprozeß auf einer Organisationsstruktur abgebildet ist, anhand derer jedes Meldeelement mit einer Anzahl weiterer Meldeelemente verknüpft ist, erfindungsgemäß gelöst,
- indem in einer Datenverarbeitungsanlage für jeweils zwei Meldeelemente der Grad ihrer Korrelation bestimmt wird anhand der Anzahl ihrer Verknüpfungen miteinander,
- indem für die mit einem vorgebbaren Meldeelement korrelierten Meldeelemente Informationselemente generiert werden, und
- indem die Informationselemente derart zueinander positioniert dargestellt werden, daß der Abstand zwischen jeweils zwei Informationselementen den Grad ihrer Korrelation repräsentiert, wobei die Organisationsstruktur das Betriebshandbuch der Kraftwerksanlage ist.

Die Erfindung geht dabei von der Überlegung aus, daß auf der Grundlage des mathematischen Modells der formalen Begriffsanalyse große Mengen von Meldeelementen nach dem Prinzip "kontextuelle Nähe entspricht räumlicher Nähe" hinsichtlich ihrer Bedeutung für den Betriebszustand der Kraftwerksanlage gefiltert, verdichtet und/oder strukturiert werden können.

Die Grundzüge der formalen Begriffsanalyse sind beispielsweise zusammengefaßt in den Druckschriften M. Luxemburger "Implikationen, Abhängigkeiten und Galois-Abbildungen. Beiträge zur formalen Begriffsanalyse", Dissertation, TH Darmstadt (1993), und Proc. NATO Adv. Study Inst., Banff/Can. 1981, PP 445 bis 470 (1982) sowie G. Kalmbach, "Diskrete Mathematik. Ein Intensivkurs für Studienanfänger mit Turbo-Pascal-Programmen" (1981).

Die Meldeelemente werden dabei im Sinne der formalen Begriffsanalyse als Gegenstände interpretiert, denen als Merkmale die im Betriebshandbuch hinterlegten Maßnahmen nach dem Kriterium zugeordnet werden, ob im Rahmen einer Maßnahme auf ein Meldeelement verwiesen wird oder nicht. Nachdem in der Art einer Zuordnungstabelle für alle Meldeelemente geprüft wurde, in welchen Maßnahmen auf sie verwiesen wurde und in welchen nicht, wird die kontextuelle oder auch inhaltliche Nähe von jeweils zwei Meldeelementen bestimmt. Dazu wird das Verhältnis der Anzahl der Maßnahmen, im Rahmen derer auf die beiden Meldeelemente gemeinsam verwiesen wird, zur Anzahl derjenigen Maßnahmen, im Rahmen derer auf mindestens eines der beiden Meldeelemente verwiesen wird, ermittelt. Mit anderen Worten: Jeweils zwei Meldeelemente, die in allen Merkmalen übereinstimmen, weil auf sie im Rahmen der gleichen Maßnahmen verwiesen wird, werden als einander inhaltlich besonders nahe klassifiziert. Dagegen werden zwei Meldeelemente, die in keinem Merkmal übereinstimmen, weil im Rahmen keiner Maßnahme auf beide Meldeelemente gemeinsam verwiesen wird, als einander inhaltlich nicht nahe klassifiziert.

Für eine graphische Darstellung wird für ein vorgegebenes Meldeelement die inhaltliche Nähe dieses Meldeelements zu anderen Meldeelementen in eine räumliche Nähe der die Meldeelemente repräsentierenden Informationselemente transformiert. Durch die graphische Darstellung werden somit andere Meldeelemente, die mit dem ausgewählten besonders stark korreliert sind, nahe zu diesem positioniert dargestellt. Insbesondere bei Meldeelementen, die Störungen in verschiedenen Anlagenteilen repräsentieren, die auf eine gemeinsame Störfallursache zurückzuführen sind, ist die Störfallursache somit für das Bedienpersonal besonders leicht erkennbar. Auf diese Weise ist eine Fehlerdiagnose besonders zuverlässig und effektiv möglich.

Die Organisationsstruktur basiert dabei auf dem Betriebshandbuch der Kraftwerksanlage. Das Betriebshandbuch liegt dazu zweckmäßigerweise in einer zur Datenverarbeitung verwertbaren Form, beispielsweise in Form von Hyperlinks, vor. Die Gliederungseinheiten des Betriebshandbuchs in Form von Maßnahmen können dabei auch Funktionspläne umfassen, wobei jeder Funktionsplan analog zu einem Unterprogramm eines Computerprogramms eine kleine Anzahl von miteinander logisch verknüpften Verfahrensschritten des Anlagenprozesses umfaßt.

Um dem Bedienpersonal einen besonders zuverlässigen Informationszugriff zu ermöglichen, ist zweckmäßigerweise anhand eines als Informationselement dargestellten Meldeelements eine Sektion des hinterlegten Betriebshandbuchs aufrufbar und als Textausgabe darstellbar. Dies kann beispielsweise bei einem auf einem Bildschirm dargestellten Meldeelement durch Mausklick, Lichtgriffel oder ein anderes graphisches Aktivierungsverfahren für angezeigte Informationselemente erfolgen.

Für eine besonders einfache und zuverlässige Störfalldiagnose werden vorteilhafterweise aktuell vorliegende Meldeelemente repräsentierende Informationselemente und aktuell nicht vorliegende Meldeelemente repräsentierende Informationselemente als voneinander unterscheidbare Symbole dargestellt. Somit ergeben sich für das Bedienpersonal besonders leicht und schnell erfaßbare, für Störfallursachen charakteristische Darstellungsmuster.

Die mit der Erfindung erzielten Vorteile bestehen insbesondere darin, daß für das Bedienpersonal durch die Darstellung von Meldeelementen anhand ihrer kontextuellen und somit inhaltlichen Nähe eine schnelle und zuverlässige Orientierung und Navigation in einer großen Menge von signalbezogenen Verweisen in einem Betriebshandbuch möglich ist. Zudem ist eine besonders einfache Signalverfolgung durch Interaktion auch in bezug zu aktuellen Anlagenmeldungen oder Simulationskomponenten ermöglicht, wobei Signalverweispfade auf verschiedenen Detaillierungsebenen besonders übersichtlich darstellbar sind.

Ein Ausführungsbeispiel der Erfindung wird anhand einer Zeichnung näher erläutert. Darin zeigen:
- FIG 1: ein Funktionsschema mit zur Durchführung eines Analyseverfahrens für eine Kraftwerksanlage vorgesehenen Komponenten, und
- FIG 2: eine für einen Störfall im Anlagenprozeß charakteristische Anordnung von Meldeelemente repräsentierenden Informationselementen.

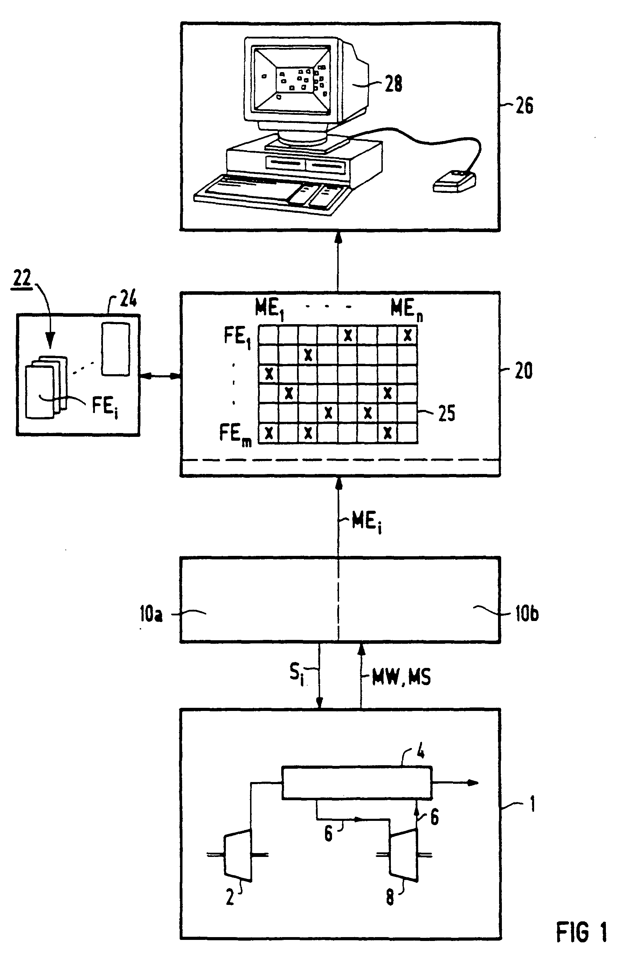

Als Kraftwerksanlage ist in Figur 1 schematisch eine Gas- und Dampfturbinenanlage 1 dargestellt. Diese umfaßt eine Gasturbine 2 und einen dieser rauchgasseitig nachgeschalteten Abhitzedampferzeuger 4, dessen Heizflächen in den Wasser-Dampf-Kreislauf 6 einer Dampfturbine 8 geschaltet sind.

Von (nicht dargestellten) Sensoren erfaßte Meßwerte MW sowie von (nicht dargestellten) Signalgebern abgegebene Meldesignale MS werden einem Automatisierungssystem 10a und einem leittechnischen Informationssystem 10b zugeführt.

In Automatisierungseinheiten des Automatisierungs- und Informationssystems 10a, 10b der Gas- und Dampfturbinenanlage 1 werden die Meßwerte MW und die Meldesignale MS vorverarbeitet. Gegebenenfalls werden Steuersignale Sᵢ an Komponenten der Gas- und Dampfturbinenanlage 1 abgegeben. Die zusammenlaufenden Informationen über Messungs-, Regelungs- und Steuerungsereignisse sowie über die Signalerzeugung werden im Informationssystem 10b hinterlegt. Durch die innerhalb des Automatisierungs- und Informationssystems 10a, 10b ablaufenden Prozesse wird die Gas- und Dampfturbinenanlage 1 automatisch gesteuert und überwacht. Von dem Automatisierungs- und Informationssystem 10a, 10b werden anhand der online erfaßten Meßwerte MW und Meldesignale MS sowie der Steuersignale Sᵢ für den Anlagenprozeß relevante Meldeelemente MEᵢ generiert. Diese werden an einen an das Automatisierungs- und Informationssystem 10a, 10b angeschlossenen Rechnerbaustein 20 übergeben.

Der Anlagenprozeß der Gas- und Dampfturbinenanlage 1 ist auf eine Organisationsstruktur abgebildet, die in einer zur Datenverarbeitung verwertbaren Form eines Betriebshandbuchs 22 in einem mit dem Rechnerbaustein 20 verbundenen Speicherbaustein 24 elektronisch hinterlegt ist. Das Betriebshandbuch 22 umfaßt eine Anzahl von Funktionseinheiten FEᵢ, die beispielsweise zu ergreifenden Maßnahmen beim Auftreten einer Störung entsprechen. Im Rahmen jeder als Funktionseinheit FEᵢ hinterlegten Maßnahme wird dabei auf eine Anzahl von Meldeelementen MEᵢ verwiesen, aufgrund derer die jeweilige Maßnahme einzuleiten ist, oder die infolge einer eingeleiteten Maßnahme durch eine Anlagenkomponente der Gas- und Dampfturbinenanlage 1 generiert werden kann. So verweist beispielsweise die Maßnahme "Notabschaltung einer Pumpe" auf die als Meldeelemente MEᵢ zu analysierenden Störungsmeldungen "Wasserdruck zu hoch", Pumpendrehzahl zu hoch" oder "Kühltemperatur zu hoch".

Auf Abruf werden die Funktionseinheiten FEᵢ dem Rechnerbaustein 20 zugeführt. Innerhalb des Rechnerbausteins 20 wird für jedes Meldeelement MEᵢ und jede als Funktionseinheit FEᵢ hinterlegte Maßnahme geprüft, ob im Rahmen dieser Maßnahme auf dieses Meldeelement MEᵢ verwiesen wird. Dazu wird ein Kontext generiert, in dem in Form einer Matrix 25 eine eindeutige Zuordnung von Funktionseinheiten FEᵢ zu Meldeelementen MEᵢ durchgeführt wird. Diese Zuordnung ist im Sinne der formalen Begriffsanalyse als Zuweisung von Merkmalen zu Gegenständen zu verstehen.

Nach Vorgabe eines bestimmten Meldeelements MEᵢ werden anhand von im Kontext vorhandenen Informationen allen Meldeelementen MEᵢ vom Rechnerbaustein 20 räumliche Koordinaten zugeordnet. Dabei wird nach dem Prinzip "kontextuelle Nähe entspricht räumlicher Nähe" der Grad der Korrelation zwischen jeweils zwei Meldeelementen MEᵢ bestimmt. Dazu wird das Verhältnis der Anzahl derjenigen als Funktionseinheiten FEᵢ hinterlegten Maßnahmen, in deren Rahmen auf beide Meldeelemente MEᵢ gemeinsam verwiesen wird, zur Anzahl der als Funktionseinheiten FEᵢ hinterlegten Maßnahmen, in deren Rahmen auf mindestens eines der beiden Meldeelemente MEᵢ verwiesen wird, ermittelt. Aus diesem Verhältnis ergibt sich dann ein quantitatives Maß für den Grad der Korrelation zwischen diesen beiden Meldeelementen MEᵢ. Wird zum Beispiel auf beide Meldeelemente MEᵢ ausschließlich im Rahmen derselben als Funktionseinheiten FEᵢ hinterlegten Maßnahmen verwiesen, so sind die beiden Meldeelemente MEᵢ hochgradig korreliert. Demgegenüber sind zwei Meldeelemente MEᵢ nicht miteinander korreliert, wenn auf sie im Rahmen keiner als Funktionseinheit FEᵢ hinterlegten Maßnahme gemeinsam verwiesen wird. Dieses quantitative Maß der Korrelation zwischen zwei Meldeelementen MEᵢ wird in einen entsprechenden Abstand ihrer räumlichen Koordinaten zueinander transformiert.

Auf der Grundlage dieser räumlichen Zuordnung wird eine graphische Darstellung für die Meldeelemente MEᵢ in einem Graphikmodul 26 erzeugt. Von dem Graphikmodul 26 werden zunächst Informationselemente Iᵢ (MEᵢ) für die mit dem vorgegebenen Meldeelement MEᵢ korrelierten Meldeelemente MEᵢ generiert und anhand der räumlichen Koordinaten auf eine Anzeige 28 positioniert. Dabei ist für das Bedienpersonal bereits aus dem Abstand des Informationselements Iᵢ(MEᵢ) eines Meldeelements MEᵢ zu dem Informationselement Iᵢ(MEᵢ) des vorgegebenen Meldeelements MEᵢ erkennbar, inwieweit ein Meldeelement MEᵢ mit dem vorgegebenen Meldeelement MEᵢ korreliert ist. Dadurch wird deutlich gemacht, in welchem Zusammenhang jedes Meldeelement MEᵢ mit dem vorgegebene Meldeelement MEᵢ steht. Somit ist für das Bedienpersonal eine möglicherweise einer Mehrzahl von Meldeelementen MEᵢ gemeinsam zugrundeliegende Störung besonders leicht erkennbar. Eine Analyse für die Ursachen der Störung ist dadurch deutlich erleichtert.

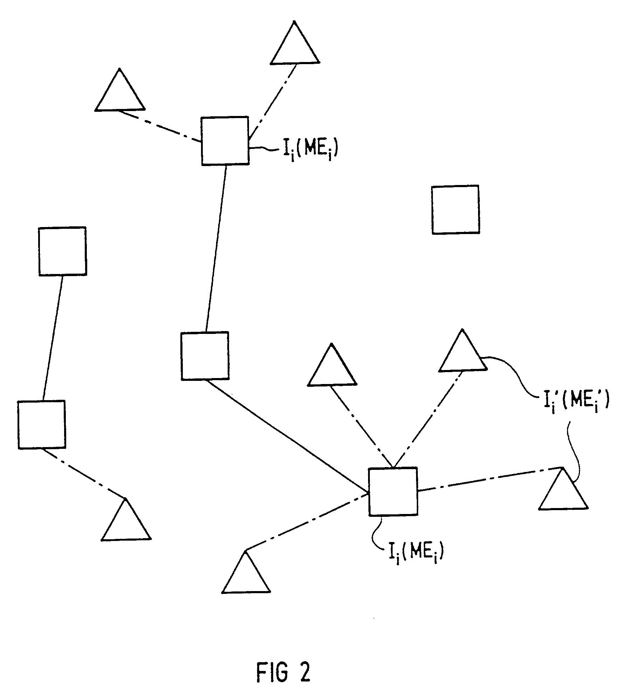

Diese Analyse wird für das Bedienpersonal weiter erleichtert, indem die Informationselemente Iᵢ(MEᵢ) als unterschiedliche Symbole dargestellt werden, je nachdem, ob das ihnen jeweils zugrundeliegende Meldeelement MEᵢ aktuell vorliegt oder nicht. Beispielsweise können die beiden Meldungen "Pumpendrehzahl zu hoch" und "Wasserdruck zu hoch" für eine Pumpe hochgradig korreliert sein, so daß die diesen Meldeelementen MEᵢ zugeordneten Informationselemente Iᵢ(MEᵢ) räumlich nahe beieinander positioniert dargestellt werden. Für das Bedienpersonal ist dabei eine erste Information daraus ableitbar, ob beide hochgradig miteinander korrelierten Meldungen aktuell vorliegen, oder nur eine von beiden. Im Ausführungsbeispiel gemäß Figur 2 sind die die aktuell vorliegenden Meldungen MEᵢ repräsentierenden Informationselemente Iᵢ(MEᵢ) als Quadrate dargestellt, wogegen die die nicht aktuell vorliegenden Meldungen MEᵢ, repräsentierenden Informationselemente I'ᵢ(ME'ᵢ) als Dreiecke dargestellt sind.

Anhand jedes als Informationselement Iᵢ(MEᵢ) dargestellten Meldeelements MEᵢ ist eine Sektion des hinterlegten Betriebshandbuchs 22 aufrufbar und als Textausgabe darstellbar. Falls erforderlich, sind somit alle zur Einleitung von Gegenmaßnahmen bei einer Störung notwendigen Informationen unmittelbar verfügbar.

## Patentansprüche

1. Verfahren zur Analyse von Meldeelementen einer Kraftwerksanlage, deren Anlagenprozeß auf eine Organisationsstruktur abgebildet ist, anhand derer jedes Meldeelement (MEᵢ) mit einer Anzahl weiterer Meldeelemente (MEᵢ) verknüpft ist,
- bei dem in einer Datenverarbeitungsanlage für jeweils zwei Meldeelemente (MEᵢ) der Grad ihrer Korrelation bestimmt wird anhand der Anzahl ihrer Verknüpfungen miteinander,
- bei dem für die mit einem vorgebbaren Meldeelement (MEᵢ) korrelierten Meldeelemente (MEᵢ) Informationselemente (Iᵢ (MEᵢ)) generiert werden, und
- wobei die Informationselemente (Iᵢ(MEᵢ)) derart zueinander positioniert dargestellt werden, daß der Abstand zwischen jeweils zwei Informationselementen (Iᵢ(MEᵢ)) den Grad der Korrelation der zugehörigen Meldeelemente (MEᵢ) repräsentiert, wobei die Organisationsstruktur das Betriebshandbuch (22) der Kraftwerksanlage ist.

2. Verfahren nach Anspruch 1, bei dem anhand eines als Informationselement (Iᵢ(MEᵢ)) dargestellten Meldeelements (MEᵢ) eine Sektion des hinterlegten Betriebshandbuchs (22) aufrufbar und als Textausgabe darstellbar ist.

3. Verfahren nach Anspruch 1 oder 2, bei dem aktuell vorliegende Meldeelemente (MEᵢ) repräsentierende Informationselemente (Iᵢ(MEᵢ)) und aktuell nicht vorliegende Meldeelemente (MEᵢ') repräsentierende Informationselemente (Iᵢ' (MEᵢ')) als voneinander unterscheidbare Symbole dargestellt werden.

## Claims

1. Method of analysing signal elements of a power-station system whose system process is imaged on an organizational structure on the basis of which every signal element (MEᵢ) is linked to a number of further signal elements (MEᵢ),
- in which, for every two signal elements (MEᵢ), the degree of their correlation is determined in a data processing system on the basis of the number of their links to one another,
- in which information elements (Iᵢ (MEᵢ)) are generated for the signal elements (MEᵢ) correlated with a specifiable signal element (MEᵢ), and
- wherein the information elements (Iᵢ (MEᵢ)) are displayed positioned with respect to one another in such a way that the distance between every two information elements (Iᵢ (MEᵢ)) represents the degree of correlation of the associated signal elements (MEᵢ), the organizational structure being the operating manual (22) of the power-station system.

2. Method according to Claim 1, in which a section of the stored operating manual (22) is retrievable on the basis of a signal element (MEᵢ) displayed as an information element (Iᵢ (MEᵢ) and can be displayed as a text output.

3. Method according to Claim 1 or 2, in which information elements (Iᵢ (MEᵢ)) representing currently present signal elements (MEᵢ) and information elements (Iᵢ' (MEᵢ')) representing signal elements (MEᵢ') not currently present are displayed as symbols that can be distinguished from one another.

## Revendications

1. Procédé d'analyse d'éléments indicateurs d'une centrale électrique dont les opérations sont reproduites sur une structure d'organisation au moyen de laquelle chaque élément (MEᵢ) indicateur est relié à un certain nombre d'autres éléments (MEᵢ) indicateur,
- dans lequel on détermine dans une installation de traitement de données pour respectivement deux éléments (MEᵢ) indicateurs le degré de leur corrélation au moyen du nombre de leurs liaisons entre eux,
- dans lequel on génère des éléments (Iᵢ(MEᵢ)) d'information pour les éléments (MEᵢ) indicateurs corrélés à un élément (MEᵢ) indicateur pouvant être prescrit, et
- les éléments (Iᵢ(MEᵢ)) d'information étant représentés en étant mis en position les uns par rapport aux autres de façon que la distance entre respectivement deux éléments (Iᵢ(MEᵢ)) d'information représente le degré de corrélation des éléments (MEᵢ) indicateurs associés, la structure d'organisation étant le manuel (22) de fonctionnement de la centrale électrique.

2. Procédé suivant la revendication 1, dans lequel on peut appeler au moyen d'un élément (MEᵢ) indicateur représenté sous forme d'élément (Iᵢ(MEᵢ)) d'information une section du manuel (22) de fonctionnement mémorisée et on peut la représenter sous la forme d'un texte.

3. Procédé suivant la revendication 1 ou 2, dans lequel des éléments (Iᵢ(MEᵢ)) d'information, représentant des éléments (MEᵢ) indicateurs actuellement présents, et des éléments (Iᵢ'(MEᵢ')) d'information, représentant des éléments (MEᵢ') d'information qui ne sont pas actuellement présents, sont représentés par des symboles qui peuvent être distingués les uns des autres.
